Europäisches Patentamt

**European Patent Office**　　　(11) Publication number: **0 123 738**
A2
**Office européen des brevets**

(12) **EUROPEAN PATENT APPLICATION**

(21) Application number: **83201023.5**　　　(51) Int. Cl.³: **F 16 H 3/72**

(22) Date of filing: **09.07.83**

(30) Priority: **03.03.83 IT 1988383**

(71) Applicant: **Dell'Acqua, Giorgio, Via Manzoni, 199, I-21055 Gorla Minore (Varese) (IT)**

(43) Date of publication of application: **07.11.84 Bulletin 84/45**

(72) Inventor: **Dell'Acqua, Giorgio, Via Manzoni, 199, I-21055 Gorla Minore (Varese) (IT)**

(84) Designated Contracting States: **AT BE CH DE FR GB IT LI LU NL SE**

(74) Representative: **Mittler, Enrico, Corso Buenos Aires, 64, I-20124 Milano (IT)**

(54) **Gear speed-variator of epicylic kind.**

(57) To the gear support (11) of an epicylic gear train there is associated a braking system, which comprises a liquid pump (15) driven by the gear support and inserted in a hydraulic circuit and a variable neck (17) inserted in the pump delivery.

EP 0 123 738 A2

"Gear speed-variator of epicyclic kind"

\* \* \* \* \*

The presente invention relates to a gear speed-variator of e picyclic kind, which allows a fine and continuous variation of the transmission ratio.

There are known many kinds of gear speed-variators, among which there are those with epicyclic gear train. Practically all the known variators are therefore able to assure the choice among prefixed and precise transmission ratios, but not the fine and continuous variation of the transmission ratio between a mi nimum and a maximum value, as it could be desired for many applications.

The object of the present invention is therefore to realize a gear speed-variator of epicyclic kind, which allows to change the transmission ratio in a fine and continuous way, in order to make it assume any desired value inside a very wide variability field.

According to the invention such an object has been reached by means of a speed-variator of epicyclic kind, comprising a first shaft and a second shaft coaxially disposed and respectively integral with a central pinion and with a peripheral internally toothed ring gear disposed one inside the other, said pinion and said ring gear being mechanically interconnected by at least two planetary gears housed in the annular space between said pinion and said ring gear and supported in a freely rotating way by a planetary gear support which rotates coaxially with said shafts, and there being provided braking means for said gear support, characterized in that said braking means comprise a pump for liquids driven by said gear support and inserted in a hydraulic circuit and a variable neck inserted in the delivery of said pump.

It is evident that the association of a pump for liquids (for example with gears or piston) and of a variable neck to the rotating support of the planetary gears of an epicyclic mechanism, such as the above mentioned one, makes possible the braking of the same support in a finely and continuously variable way in a very large field. In fact, if the neck is completely open, the pump is free to deliver the maximum liquid delivery and consequently the gear support is let free to rotate under the thrust given by the central pinion to the planetary gears and therefore to the gear support; the result is that the planetary gears carry out a free revolution movement around the central pinion without giving any movement to the peripheral ring gear, which consequently remains stopped, that is the transmission ratio is 0. On the contrary, if the neck is completely closed; the incompressibility characteristics of the liquid of the hydraulic circuit (for example oil) cause the lock of the pump and consequently of the gear support; in such case the planetary gears make only a rotatory movement around their own axes, as a result of which the peripheral ring gear in its turn rotates, in the opposite sense with respect to that of the pinion, with a maximum transmission ratio which depends only on the number of the teeth of the several gears engaged with each other. Finally, in the intermediate situations, that is with the neck partially open, the pump is partially braked and the gear support is partially braked too; as a consequence, the planetary gears carry out a combined movement of rotation and revolution, from which there results a rotatory movement of the peripheral ring gear with a transmission ratio at a middle value betwwen 0 and the maximum.

From all of this it is clear that the transmission ratio of the speed-variator according to the invention depends only on the adjustment of the variable neck and, as this latter can be adjusted in a fine and continuous way according to the operator desires, the transmission ratio can evidently be changed in a similar fine and continuous way.

The characteristics and the advantages of the present invention will be made more evident by the following detailed description of an embodiment illustrated by way of non-limitative example in the enclosed drawings, in which:

Fig. 1 shows a speed-variator according to the invention in axial section;

Fig. 2 shows said speed-variator in frontal view from left with respect to Fig. 1;

Fig. 3 shows the brakage system of the gear support of said variator in section along line III-III of Fig. 1.

The speed-variator illustrated in the drawings comprises two coaxial hollow shafts 1 and 2, the first one of which is rotatably inserted in the second one and the second one is rotatably supported by base elements 3 by means of bearings 4.

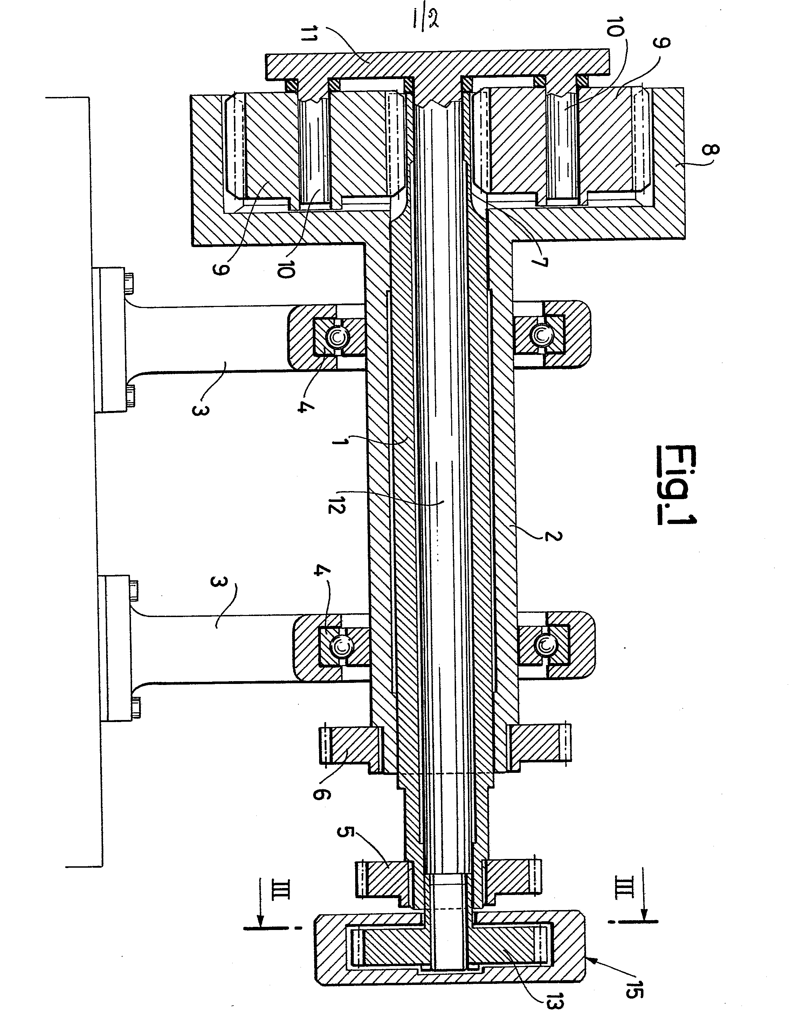

One end of the inner shaft 1 (the right one looking at Fig. 1) integrally carries a gear 5 destined for receiving the inlet rotatory movement and the corresponding end of the outer shaft 2 integrally carries another gear 6 destined for the transmission of the outlet rotatory movement.

The other end of the shaft 1 is in its turn shaped as a pinion 7 and the corresponding end of the shaft 2 enlarges in its turn so as to form a peripheral internally toothed ring gear 8, inside of which the above mentioned pinion 7 is centrally located.

The pinion 7 and the ring gear 8 are mechanically connected to each other by a pair of planetary gears 9 (of double diameter with respect to the pinion 7) inserted in the annular space defined between said pinion and said ring gear and with these latter in toothed engagement.

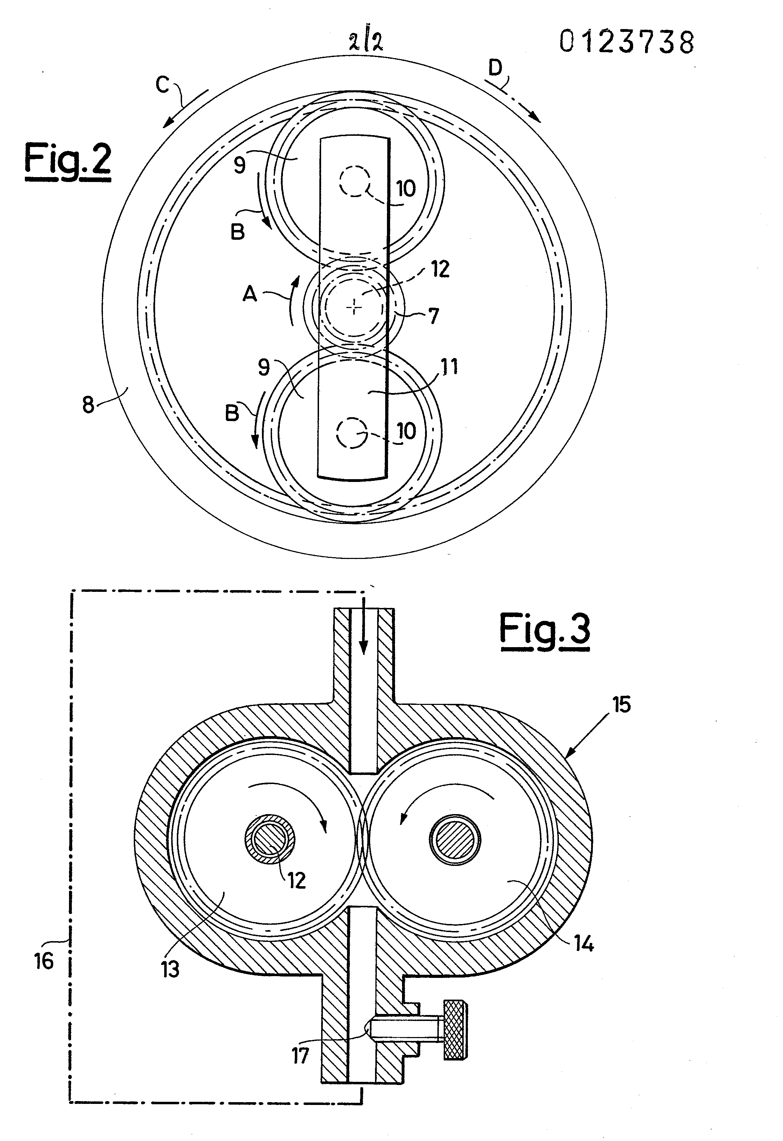

As shown in Figs. 1 and 2, the two planetary gears 9 are rotatably mounted on respective rotation pins 10 made integral with a gear support arm 11 integral in its turn with one end of a central pin 12, which is rotatably housed and supported inside the shaft 1.

On the other end of the above mentioned pin 12 is on the other hand mounted one (13) of the two gears 13 and 14 (this latter idle) of a gear pump 15, which is inserted in a hydraulic circuit 16 (schematically represented in Fig. 3) and presents at its delivery a variable neck 17 (also schematically and conventionally represented in Fig. 3). The pump 15 and the variable neck 17 constitute the adjustable braking system of the gear support 11.

In the operation, the maximum transmission ratio of the inlet shaft 1 to the outlet shaft 2 is obtained with the neck 17 completely closed. In such case, in fact, the delivery of the pump 15 is locked and with it the same pump 15 is locked, so that the gear support 11 is stopped and the rotation of the shaft 1 (arrow A of Fig. 2) is transmitted through the planetary gears 9 in mere axial rotation (arrow B of Fig. 2) to the ring gear 8, which rotates in the sense of the arrow C of Fig. 2, and consequently to the outlet shaft 2. The transmission ratio evidently depends on the number of the teeth of the several gears 7, 9 and 8 engaged with each other.

On the contrary, the transmission ratio is zero, that is the ring gear 8 and the outlet shaft 2 remain stopped, if the neck 17 is completaly open. In such case, in fact, the oil circulation in the hydraulic circuit 16 is completely free and the pump 15 is therefore free to rotate at the speed given by the pin 12. The support gear 11 therefore is in its turn free to rotate, bringing the planetary gears 9. As a consequence of the rotation of the shaft 1, the planetary gears 9 therefore carry a revolution movement around the axis of the pin 12, rotating at the same time around their own axes but letting stationary the ring gear 8.

A possible intermediate situation between the two above explained can be obtained on the other hand by adjusting the neck 17, in a fine and continuous way, in a partial open condition (for example as shown in Fig. 3). By so doing, the flow of the liquid pumped through the neck 17 is limited according to the used adjustment, and correspondingly the movement of the pump and consequently of the gear support 11 is braked. The result is that the planetary gears 9 are able to respond to the rotation of the pinion 7, and consequently of the inlet shaft 1, with a combined movement of rotation and revolution, from which there arises for the ring gear 8 a rotation in the sense of the arrow C at a speed depending on the brakage of the gear support 11 and consequently on the adjustment of the neck 17. Since this latter can be adjusted in a fine and continuous way, it is evidently possible to obtain transmission ratios correspondingly variable in a fine and continuous way. The precision in the determination of the transmission ratio is in such case assured by the incompressibility of the chosen liquid (for example oil).

If required, while keeping inalterated the rotation sense of the shaft 1, it is also possible to obtain an opposite rotation sense for the shaft 2. To this end it is sufficient to make in tegral (for example through pins) the shaft 1 and the pin 12 and to make maximum the opening of the neck 17. The support shaft is thus allowed to rotate integrally with the shaft 1 at an angular speed which, being higher that that of the planetary gears 9, causes a slower rotation of the ring gear 8 in oppo site direction with respect to the normal one, that is in the sense of the arrow D in fig. 2.

Naturally that represented in the drawings is only one of the many possible embodiments of the speed-variator according to the present invention.

Many can be the variations, however comprised in the limits of the invention. Particularly, for example, the diameters of the gears 7, 9 and 8 can change among large limits, the pump 15 can't be of the gear kind and the neck 17 may have several more or less refined shapes. Besides there can be provided for the neck 17 a manual (as schematically represented in Fig. 3) or automatic (dependent upon the services required to the speed variator) or still semi-automatic control. However it must be clear that all the above mentioned variations are included in the spirit and in the object of the invention, as defined in the following claims.

## CLAIMS

1. Speed-variator of epicylic kind, comprising a first shaft and a second shaft coaxially disposed and respectively integral with a central pinion and with a peripheral internally toothed ring gear disposed one inside the other, said pinion and said ring gear being mechanically interconnected by at least two planetary gears housed in the annular space between said pinion and said ring gear and supported in a freely rotating way by a planetary gear support which rotates coaxially with said shafts and there being provided braking means for said gear support, characterized in that said braking means comprise a pump for liquids driven by said gear support and inserted in a hydraulic circuit and a variable neck inserted in the delivery of said pump.

2. Speed-variator according to claim 1, characterized in that said first shaft is rotatably housed inside the second one and said support gear is in its turn integral with a rotation pin rotatably housed inside said first shaft, said rotation pin constituting the driving element of the pump.

3. Speed-variator according to claim 2, characterized in that said pump is of the gear kind with a gear mounted and fixed on said rotation pin and the other gear idle.

Fig.1

0123738

## Fig.2

## Fig.3